# EUROPEAN PATENT SPECIFICATION

(11) **EP 0 904 877 B1**
(45) Date of publication and mention of the grant of the patent: **29.01.2003**
(21) Application number: 97830621.5
(22) Date of filing: 26.11.1997
(51) Int. Cl.: B23D 25/12, B26D 1/62, B26D 5/02, B26D 5/00

(54) **Apparatus for cutting continuously supplied material**
Vorrichtung zum Schneiden kontinuierlich zugeführten Materials
Appareil pour la coupe d'une matière alimentée en continu

(30) Priority: 29.09.1997 IT MI972201
(43) Date of publication of application: 31.03.1999
(73) Proprietor: SMS DEMAG INNSE S.p.A., 20134 Milano (IT)
(72) Inventor: Rossi, Antonino, 20060 Cassina De Pecchi (Milano) (IT); Arreghini, Gianfranco, 20059 Vimercate (Milano) (IT); Cernuschi, Ettore, 20010 Bareggio (Milano) (IT); Rovelli, Corrado, 24048 Treviolo (Bergamo) (IT)
(74) Representative: Ferroni, Filippo

(56) References cited:
- FR-A- 2 149 173
- FR-A- 2 333 604

## Description

The present invention relates to the cutting of material supplied continuously at high speeds, as occurs, for example, in the iron and steel industry during the production of rolled metal strips with thin thicknesses, i.e. less than 1.5 mm.

Before continuing further it should be pointed out that although for sake of brevity in this description reference will be made mainly to flat metal rolled products (strips), the teaching of the invention must nevertheless be understood as being valid also in other fields where there are the same preconditions underlying it and which will emerge more clearly below.

Consequently the shearing apparatus which forms the subject of this invention, must be regarded as being applicable to both the hot and cold cutting not only of strips but also of metal products such as round bars, wire rods and bars in general, as well as to similar products made of other materials: for example plastics. Furthermore, applications to the manufacturing process of paper or textile products in strip form, cannot be excluded.

More specifically, the invention relates to a shearing device with rotating drums.

These shearing devices are already known and are used in the processing of flat metal rolled products; they consist of two opposed and counter-rotating cylindrical drums, having parallel axes and being spaced from one another so as to leave the necessary space for the passage of a strip moved forwards between the two drums; in this connection it just needs to be pointed out that, for feeding the material to be cut, means known per se generally located either upstream and downstream of the shearing device are provided.

Along one or more of the generatrices of the cylinders which form these drums there is mounted a blade, the cutting edge thereof projects with respect to the remainder of the external surface of the corresponding drum: the cutting action is performed as a result of the meeting together, along the plane containing the axes of rotation of the neighbouring drums, of the respective blades when they find themselves opposed one another.

In fact when the two blades meet during rotation of the drums, their cutting edges project with respect to the profile of the drums and come into contact with the strip advancing between the drums from opposite sides thereof, cutting it transversely.

In the known shearing devices the drums are operated by means of a single driving motor with an annexed transmission system, generally called divider, so as to obtain the same angular speed of rotation; the peripheral speeds of the drums are moreover close to the strip feeding speed.

It is therefore understandable that with an increase in these speeds, the difficulties related to the construction of the shearing devices also increase considerably.

In particular, the problems arise when the strip is supplied continuously, i.e. without interruption, at feed speeds greater than 10 m/s, for example 15-20 m/s, as occurs in the hot production of rolled strips with a thickness less than one millimetre.

It must be remembered, indeed, that when sections of strip material of a given length must be cut, it is necessary to prevent the blades of the drums from acting before the due time; in other words, since the blade at each rotation of the associated drum returns into the cutting position, it is necessary to ensure that this occurs only at the desired moment so as to separate a section of material of the desired length.

In order to achieve this result, different solutions are possible which are nowadays used in the industrial activity.

In slow machines for example, the drums remain mostly in a standstill condition and only at the moment of cutting they are activated for a fraction of a revolution: this occurs so that after cutting has been performed, the blades are brought out of interference following to the rotation of the drums through a sufficient angle; thereafter the drums are stopped and remain in a standby condition for the subsequent cutting.

Another solution, which is adopted in the case of processing at higher speeds, consists in combining rotation of the drums with their displacement between a position close to the material to be cut and a position removed therefrom. In these shearing devices, the drums are started in motion while they are located still far from the strip; only subsequently they are brought into the close position so as to allow the blades to act on the advancing strip.

In view of the high number of revolutions of the drums owing to the fact that their peripheral speed must be nearly the same as that of the strip, after each cut, however, it is necessary to move them away again since otherwise the blades could interfere unduly with the strip.

The known shearing devices summarised here, however, are not suitable to cope with the growth of the speed at which the material to be cut is supplied; it must be remembered indeed, that doubling this speed halves the time interval between two successive revolutions of the drums.

Assuming a feed speed for the material equivalent to 20 m/s and operating with drums of 400 mm radius, the synchronism condition between the peripheral speeds of the latter and the aforementioned feed speed is reached with an angular speed of 477.46 rpm; this means that the drum performs a complete revolution every 0.1256 second.

With similar operating parameters, the construction of shearing devices according to the known art becomes excessively complex and costly so as to be basically impractical.

Indeed, in these situations the various hydraulic and/or electromechanical apparatuses which control the movements of the drums, both in the case when they are moved away and close together or in the case they operate only intermittently, should have such performances as to require dimensions considerably larger than the usual standards, with all the costs and the limitations in terms of reliability resulting therefrom.

Examples showing these situations can be found in French patent applications No. 2 333 604, according to the preamble of claim 1, and No. 2 149 173, the latter concerning, however, the cutting of metal rools.

The technical problem underlying the present invention is therefore that of remedying this state of things: namely, it consists in devising a shearing device for cutting material which is continuously supplied at high speeds, greater than 10 m/s and for example at about 15-20 m/s, with counter-rotating drums having structural and operational characteristics such as to overcome the drawbacks mentioned above.

The invention consists in a shearing device for carrying out the aforesaid method, which is characterized in the annexed claim 1.

The invention as a whole will be better understood in the light of the detailed description which is now given and that relates to a preferred and non-exclusive embodiment thereof, depicted in the accompanying drawings wherein:
- Fig. 1 shows a front perspective view of a shearing device in accordance with the invention;
- Figures 2 and 3 are respective views, sectioned along the lines II-II and III-III in Figure 1, of the shearing device shown therein;
- Fig. 4 shows in detail a gearing of the divider mechanism relating to the shearing device of the preceding figures.

With regard to the drawings, the reference I generally indicates a shearing device for cutting a rolled metal strip N.

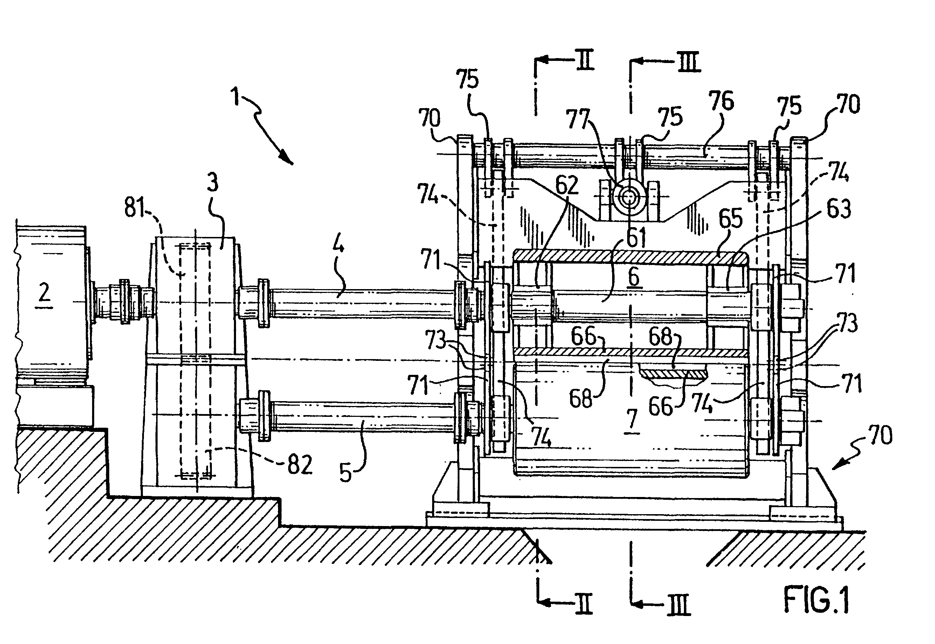

This device comprises a motor 2 downstream of which a divider mechanism 3 (referred to below briefly as "divider") is connected; the latter transmits at its output a rotary movement to a pair of shafts 4 and 5 having respectively mounted at their ends an upper drum 6 and a lower drum 7 (the first of which has been shown in cross-section in Figure 1) intended for cutting the strip N advancing along the shearing device.

The drums 6 and 7 have an external diameter slightly different from one another and in this case the first drum is smaller than the second one.

Apart from the scale aspects associated with their different dimensions, the two drums are structurally similar and therefore brief mention will be made for only one of them, it being understood that with regard to the other, reference may be made to the description below.

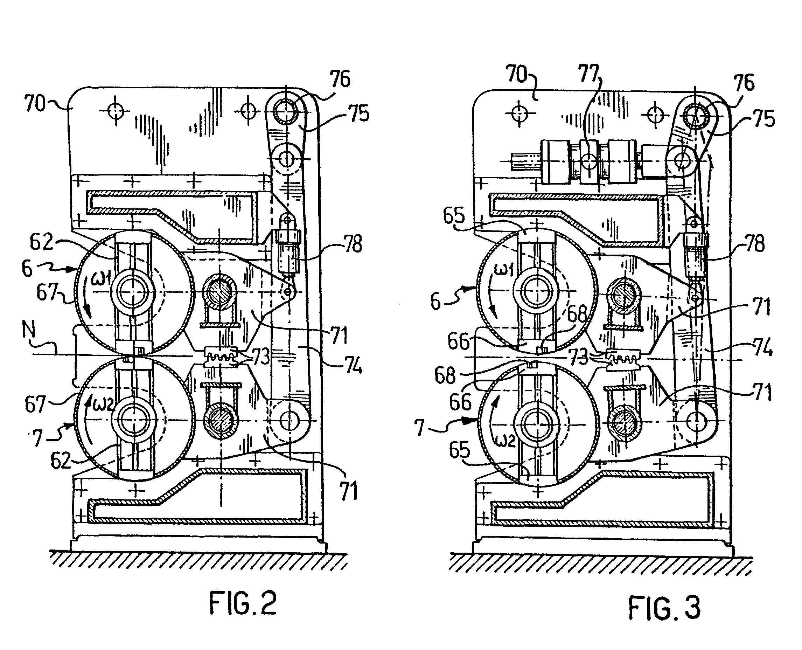

The drum 6 consists of a central axle 61 connected to the shaft 4 for its rotation, at the ends of which there are keyed two spacing devices 62 and 63; the latter are formed by a series of struts (see Figures 2 and 3) diametrically opposed with respect to the hub on which they are mounted and supporting shims 65, 66 parallel to the generatrices of the drum.

Outside the spacers and the aforementioned shims there is a cylindrical jacket 67 which forms the surface of the drum visible from the outside; it can be seen that each shim 66 of the drum 6 and 7 has, mounted on it, a blade 68, the cutting edge thereof projects slightly with respect to the cylindrical surface of the associated jacket. In this connection it should be pointed out that, in the present invention, the blades of one or both drums may also be at a lower level with respect to the cylindrical profile of the associated drum.

The drums 6 and 7 described above are supported by a general frame 70 visible in Fig. 1, that stands above a base and is formed by a series of lateral uprights, cross-pieces, etc., in a manner known per se.

The axle 61 of each drum is rotatably supported by two lever arms 71 which are pivotably hinged to the frame 70; each arm is provided moreover with a toothing 73 which meshes with that of the opposed arm supporting the other drum.

In accordance with a preferred embodiment of the invention, the arms 71 that support the lower drum 7 are connected to a rod 74 (see Fig. 2) arranged from the top to the bottom with respect to the shearing device, by means of a large pivot fixed onto the frame 70 and parallel to the axis of the drums (only the intersection outline of this pivot with the plane of the drawing in Figs. 2 and 3 is visible); at the opposite end the rod 74 is connected to a crank 75 oscillating with respect to a cross-piece 76 of the frame 70, while a hydraulic actuator 77 is active at the connection point between rod and crank.

In practice, the articulated system formed by the rod 74 and the crank 75 allows, depending on the state of activation of the actuator 77, a displacement of the hinging point of the two lever arms 71 associated with the lower drum 7 and hence a consequent oscillation thereof which causes displacement of the drum itself; owing to the engagement between the toothings 73, the oscillation of each arm 71 which supports the lower drum 7 is transmitted to the corresponding arm for the upper drum 6, thereby causing simultaneous and opposed displacement of the two drums.

Oscillation of the upper lever arms 71 takes place against the action of a spring 78 acting on the end of each arm opposite to the drum 6, so as to avoid the creation of play in the articulated kinematic system.

In practice during the cutting operation, the drums are kept in a position close to one another in the configuration of Fig. 2, wherein the rod 74 is kept in alignment with the crank 75 by the actuator 77 and hence the lever arms 71 are locked; for opening the drums, on the other hand, the actuator 77 is moved such that the point of connection between the rod and the crank can be displaced by moving the lever arms 71.

Moreover, as regards operation of the drums, the following should be noted.

The divider 3 contains inside it a gearing 80 consisting of a pair of large modular toothed wheels 81 and 82, the former being associated to the upper drum 6 whilst the latter to the lower one 7, respectively by means of the shafts 4 and 5; furthermore, the wheel 81 receives the movement from the motor 2 to which it is connected and causes rotation of the wheel 82, that is then driven by it.

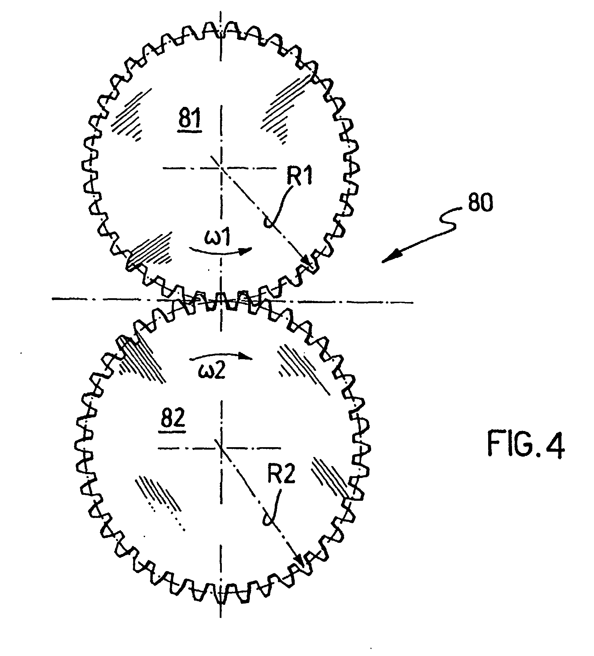

In this example the radius R1 of the pitch circumference and the number of teeth Z1 of the toothed wheel 81, are respectively less than the corresponding radius R2 and number of teeth Z2 of the wheel 82, whilst the pitches P1 and P2 of the teeth are the same; the wheels of Fig. 4 are a view, on a small scale, of a gearing wherein Z1=38 and Z2=40.

Indicating the angular speeds of rotation of the two drums 6 and 7 respectively as ω1 and ω2, the directions thereof are indicated by the arrows in the figures and are obviously opposite to one another since the drums are counter-rotating, and assuming for the sake of simplifying this explanation that such speeds are respectively the same in terms of modulus and direction of those of the toothed wheels 81 and 82 (i.e. that each drum is solid in rotation with the corresponding toothed wheel), it can be easily understood that with a divider configured in accordance with that just described, the aforementioned speeds will be different from one another during operation of the shearing device according to this invention.

Indeed the transmission ratio "i" of the gearing, regarded as the ratio between ω1 and ω2, is equal to the inverted ratio of the number of teeth, i.e. Z2/Z1, in accordance with the well-known formulae for which reference should be made to technical literature on the subject; in the light of what has been stated above in connection with the various parameters of the gearing, the drive wheel 81 and the upper drum 6 will therefore rotate at a higher number of revolutions than the driven wheel 82 and the lower drum 7.

For sake of completeness of the description it should merely be pointed out here that, as can be deduced from the drawings, the diameters of the drums and their position relative to each other are such that they have the same peripheral speed (i.e. the product of the angular speed of rotation ω with the radius r of the drum) although they rotate at a different number of revolutions from one another; this in order to obtain conditions of synchronism between the peripheral speed of both of them and the feed speed of the strip N to be cut.

Cutting of the latter by the shearing device described above is performed as follows.

The strip is continuously supplied at high speeds by means known per se which will therefore not be considered in detail here; it should merely be noted that Fig. 3 shows the profile of three rollers provided for this purpose and arranged downstream of the cutting zone of the shearing device.

At the same time the drums 6 and 7 are brought into rotation at the respective speeds ω1 and ω2 by the motor 2 and the divider 3; this is performed with the drums in the position distant from the cutting zone (as in Fig. 3).

Just before the blades 68 assume the reciprocal position required for cutting, as will emerge more clearly below, the rollers are moved towards the strip N, by activating the actuator 77.

In this situation the blades 68, rotating at respective constant angular speeds ω1 and ω2 which differ from each other and correspond to those of the associated drums, reach the condition where they are located opposite one another (as in Fig. 2) in the plane which contains the axes of rotation of the drums: at this point the cutting edge of the blades comes into contact with the strip N which is then cut in a manner similar to what happens in traditional shears.

After cutting, the drums are moved away from each other while continuing to rotate; this movement away may be performed over a sufficiently length of time to avoid the drawbacks mentioned above, even though processing is performed with high feeding speeds of the strip.

Indeed, since the two blades 68 rotate at angular speeds ω1 and ω2 different from each other, in the revolution immediately after that during which cutting occurred, they will be no longer in opposed position since meantime the rotation of the drums 6 and 7 will be different: thus in the example shown here wherein ω1 > ω2, during the revolution immediately after the cutting, the blade of the upper drum 6 will be slightly in advance with respect to the blade of the lower drum 7.

Owing to this phase-displacement in the position of the two blades, which gradually increases during the subsequent rotations, said blades do not interfere with the advancing strip immediately after cutting; obviously the degree of phase-displacement in question may vary from case to case, depending on the various operational parameters of the shearing device and production, such as for example the type and the material of the product to be cut, its thickness, the feed speed with which it is supplied, the type of blade used, the diameter of the drums, as well as the number of revolutions per minute, and so on.

It should be pointed out also that after a certain number of revolutions of the drums 6 and 7, the two blades return into the condition facing each other wherein they can perform cutting again; this number of revolutions depends on the two speeds ω1 and ω2 of the drums and therefore, in this case, on the transmission ratio which characterizes the gearing 80 of the divider 3.

In other words, the abovementioned phase-displacement of one blade with respect to the other due to the fact that ω1 > ω2, accumulates with each revolution until after a certain number of revolutions, and hence of meshing teeth of the gearing 80, the two blades are again opposed in alignment with each other.

If Zp indicates the lowest common multiple between the number of teeth Z1 and Z2 of the toothed wheels 81 and 82, whilst N1 and N2 indicate the number of rotations of each wheel after which their blades return opposed to one another, it is possible to write:
N1 = Zp/Z1 for the toothed wheel 81 and the drum 6;
N2 = Zp/Z2 for the toothed wheel 82 and the drum 7.

From what has been stated hitherto, it can thus be understood how the shearing device of this invention allows the technical problem forming the basis thereof to be solved.

Owing to the operation of the two drums 6 and 7 at respective angular speeds of rotation ω1 and ω2 different from one another, it is possible to prevent the blades from reassuming the mutually aligned condition required for cutting the strip at each revolution of the drums, as instead occurs in the shearing devices of the known art wherein the drums rotate in synchronism, i.e. at the same speed; this fact prevents the blades from interfering with the strip after cutting while the drums are moved away from it.

The movement away of the drums may therefore be performed over relatively long periods of time compared to those which would be necessary in the case, for the same feeding speed of the material to be cut, a shearing device is used having drums rotating in synchronism, as it occurs in the present state of the art.

The result of this fact is that the various hydraulic and/or electromechanical means which, in the shearing device according to the present invention serve to actuate and move the cutting drums, must not be overdimensioned with all the negative effects which have already been explained.

Moreover, by choosing a suitable ratio between the speeds ω1 and ω2 of rotation of the drums, it is possible to ensure that the time interval after which the blades of the drums reassume the condition ready for cutting is so long as to allow the blades to be easily brought close to the material passing through the shearing device; in the case herein described, this interval may be easily determined on the basis of the relationships indicated above with regard to the toothed wheels of the gearing.

Obviously variations of the invention departing from the example thereof given above and defined in the appended claims are possible.

A first possible change which appears to be fairly evident at first sight consists in replacing the single motor 2 and the divider 3 with two separate motors, each of which is intended for driving a respective drum with a number of revolutions different from that of the other drum, thus obtaining the same result of having two separate speeds of rotation ω1 and ω2 with the effects arising therefrom and already explained.

Furthermore, should it be used in any case only a single motor associated with a divider mechanism according to the functional arrangement considered above, it can be easily understood that there are many possible mechanical solutions other than that previously described, which persons skilled in the art may easily devise.

More generally, it can be stated that the divider wherein two different toothed wheels are used in order to obtain a transmission ratio which is not unitary, is particularly advantageous because it is simple to provide and hence without additional costs with respect to the dividers currently in use, wherein pairs of twin toothed wheels are applied; it is however obvious that, in order to have downstream of the motor two shafts rotating at different speeds, various divider systems which obtain the same result may be envisaged.

Moreover it is just to be specified that although the shearing device according to the invention has been devised and is indicated in particular for the cutting of materials moving with high speed, it may however be applied as well in the context of production processes performed at lower speeds.

It also cannot be excluded that shearing devices according to the teaching resulting from what has been described heretofore, may be provided with drums having two or more blades instead of the single one considered previously; for example, on the periphery of a drum there might be two blades in a diametrically opposite position or a greater number of them located uniformly or even irregularly.

Finally, the mechanisms for closing and opening the drums may also differ from that described in the example, i.e. the articulated system consisting of the rod 74, the crank 75, the actuator 77 and the spring 80, with the associated pins and connecting cross-pieces.

Similarly, the drums could also be supported differently from the oscillating arms and their structure could also be subject to changes or be adapted to each situation, depending on the various possible purposes which the shearing device according to the invention may have, as mentioned at the beginning.

All these and other possible variants nevertheless fall within the scope of the following claims.

## Claims

1. Shearing device for cutting continuously supplied sheet material, comprising a pair of drums (6, 7) arranged in opposed position and rotatably supported in a structure (70), drive means (2) and transmission means (3-5, 80-82) for rotating the drums with respective angular speeds (ω1, ω2) different from one another, **characterized in that** both drums are supported by respective oscillating lever arms (71) and that means (73-78) are provided for moving the lever arms, to space out the drums from each other.

2. Shearing device according to claim 1, wherein the drums (6, 7) have different external diameter.

3. Shearing device according to claim 1 or 2, wherein said means for moving the lever arms (71) that support the drums (6, 7) comprises a toothing (73) provided on each arm, which engages a corresponding toothing of a respectively opposite arm thereby transmitting the oscillating movement thereto for moving the drums to and fro the sheet material to be cut.

4. Shearing device according to any of claims 1 to 3, wherein the drive means (2) and the transmission means (3-5, 80-82) comprise two separate motors connected to a respective drum (6, 7).

5. Shearing device according to any of claims 1 to 3, wherein the transmission means comprises a divider mechanism (3) associated to the drive means (2), which transmits downstream thereof a respective rotary movement to the drums (6, 7) with respective angular speeds (ω1, ω2).

6. Shearing device according to claim 5, wherein the divider mechanism comprises a gearing (80) formed by a pair of toothed wheels (81, 82) different from each other, a first wheel receiving the motion from the drive means (2) whilst the second being driven by the former, and wherein each wheel is associated to a respective drum (6, 7) thereby imparting them respective angular speeds (ω1, ω2) of rotation.

7. Shearing device according to claim 6, wherein each toothed wheel (81, 82) rotates at the same angular speed (ω1, ω2) as the drum (6, 7) associated therewith.

## Patentansprüche

1. Abschergerät für das Schneiden kontinuierlich zugeführten Bandmaterials, bestehend aus einem Paar in gegenüberliegender Stellung angeordneter und in Konstruktion (70) drehbar gelagerter Walzen (6, 7), Antriebsvorrichtung (2) und Übertragungselementen (3-5, 80-82) für das Drehen der Walzen mit den jeweiligen und voneinander abweichenden Winkelgeschwindigkeiten (ω1, ω2), **dadurch gekennzeichnet,**
**dass** beide Walzen durch jeweils schwingende Hebelarme (71) abgestützt werden und Elemente (73-78) vorgesehen sind, um die Hebelarme zu verschieben und damit die Walzen auseinander zu bewegen.

2. Abschergerät nach Anspruch 1, **dadurch gekennzeichnet, dass** die Walzen (6, 7) unterschiedliche Außendurchmesser aufweisen.

3. Abschergerät nach Anspruch 1 oder 2, **dadurch gekennzeichnet, dass** die besagten Elemente für das Verschieben der Hebelarme (71), die die Walzen (6, 7) abstützen, eine Verzahnung (73) beinhalten, die an jedem Arm vorgesehen ist und in eine entsprechende Verzahnung am jeweils entgegengesetzten Arm eingereift und dadurch die Schwingbewegung überträgt, mit der die Walzen zum zu schneidenden Bandmaterial hin und von diesem weg bewegt werden.

4. Abschergerät nach einem oder mehreren der Ansprüche 1 bis 3, **dadurch gekennzeichnet, dass** die Antriebsvorrichtung (2) und die Übertragungselemente (3-5, 80-82) aus zwei getrennten Motoren bestehen, die mit den jeweiligen Walzen (6, 7) verbunden sind.

5. Abschergerät nach einem oder mehreren der Ansprüche 1 bis 3, **dadurch gekennzeichnet, dass** die Übertragungselemente einen mit der Antriebsvorrichtung verbundenen Trennmechanismus (3) beinhalten, der hinter der Antriebsvorrichtung eine Drehbewegung auf die Walzen (6,7) mit den jeweiligen Winkelgeschwindigkeiten (ω1, ω2) überträgt.

6. Abschergerät nach Anspruch 5, **dadurch gekennzeichnet, dass** der Trennmechanismus aus einem Getriebe (80) besteht, das sich aus einem Paar unterschiedlicher Zahnräder (81, 82) zusammensetzt, wobei eines der Zahnräder die Bewegung der Antriebsvorrichtung (2) aufnimmt und das zweite durch das erstgenannte angetrieben wird, und wobei jedes Rad mit der jeweiligen Walze (6, 7) verbunden ist und somit die jeweiligen Winkeldrehgeschwindigkeiten (ω1, ω2) auf die jeweilige Walze überträgt.

7. Abschergerät nach Anspruch 6, **dadurch gekennzeichnet, dass** jedes der Zahnräder (81, 82) mit der gleichen Winkelgeschwindigkeit (ω1, ω2) wie die Walze (6, 7) rotiert, mit der es verbunden ist.

## Revendications

1. Dispositif de cisaillage destiné à découper des tôles fournies de manière continue comprenant une paire de tambours (6,7) agencés en position opposée et soutenus de manière orientable dans une structure (70), un moyen d'entraînement (2) et des moyens de transmission (3 à 5, 80 à 82) destinés à faire tourner les tambours avec des vitesses angulaires respectives (ω1, ω2) différentes l'une de l'autre, **caractérisé en ce que** les deux tambours sont soutenus par des bras de levier oscillant respectifs (71) et **en ce que** des moyens (73 à 78) sont proposés pour déplacer les bras de levier afin d'espacer les tambours l'un de l'autre.

2. Dispositif de cisaillage selon la revendication 1, dans lequel les tambours (6, 7) possèdent un diamètre extérieur différent.

3. Dispositif de cisaillage selon la revendication 1 ou 2, dans lequel ledit moyen destiné à déplacer les bras de levier (71) qui soutiennent les tambours (6, 7) comprend une denture (73) proposée sur chaque bras, qui met en prise une denture correspondante d'un bras respectivement opposé transmettant ainsi le mouvement d'oscillation vers celui-ci pour déplacer les tambours vers et depuis la tôle à découper.

4. Dispositif de cisaillage selon l'une quelconque des revendications 1 à 3, dans lequel le moyen d'entraînement (2) et les moyens de transmission (3 à 5, 80 à 82) comprennent deux moteurs séparés reliés à un tambour respectif (6,7).

5. Dispositif de cisaillage selon l'une quelconque des revendications 1 à 3, dans lequel le moyen de transmission comprend un mécanisme de division (3) associé au moyen d'entraînement (2) qui transmet en aval de celui-ci un mouvement rotatif respectif aux tambours (6, 7) avec des vitesses angulaires respectives (ω1, ω2).

6. Dispositif de cisaillage selon la revendication 5, dans lequel le mécanisme de division comprend un engrenage (80) composé d'une paire de roues dentées (81, 82) différentes l'une de l'autre, une première roue recevant le mouvement depuis le moyen d'entraînement (2) alors que la deuxième est entraînée par la précédente ; et dans lequel chaque roue est associée à un tambour respectif (6, 7) leur communiquant ainsi des vitesses angulaires de rotation respectives (ω1, ω2).

7. Dispositif de cisaillage selon la revendication 6, dans lequel chaque roue dentée (81, 82) tourne à la même vitesse angulaire (ω1, ω2) que le tambour (6, 7) associé à celle-ci.
